# EUROPEAN PATENT SPECIFICATION

(11) **EP 4 505 747 B1**
(45) Date of publication and mention of the grant of the patent: **03.12.2025**
(21) Application number: 23718260.5
(22) Date of filing: 07.04.2023
(51) Int. Cl.: H04N 19/85

(54) **REDUCTION OF FILM GRAIN PATTERNS**
REDUZIERUNG VON FILMKÖRNUNGMOTIVEN
RÉDUCTION DE MOTIFS DE GRAIN DE FILM

(30) Priority: 08.04.2022 EP 22305490
(43) Date of publication of application: 12.02.2025
(73) Proprietor: InterDigital CE Patent Holdings, SAS, 75017 Paris (FR)
(72) Inventor: URBAN, Fabrice, 35576 Cesson-Sevigne (FR); DE LAGRANGE, Philippe, 35576 Cesson-Sevigne (FR); FRANCOIS, Edouard, 35576 Cesson-Sevigne (FR); NASER, Karam, 35576 Cesson-Sevigne (FR)
(74) Representative: AWA Sweden AB
(86) International application number: PCT/EP2023/059301
(87) International publication number: WO 2023/194598

(56) References cited:
- WO-A1-2022/212792
- WO-A1-2023/110642
- GROIS D ET AL: "Film grain synthesis technology for video applications (Draft 1)", no. m59205, 24 March 2022 (2022-03-24), XP030302387, Retrieved from the Internet <URL:https://dms.mpeg.expert/doc_end_user/documents/137_Teleconference/wg11/m59205-JVET-Y2020-v1-JVET-Y2020-v1.zip JVET-Y2020-v1.docx> [retrieved on 20220324]
- NORKIN ANDREY ET AL: "Film Grain Synthesis for AV1 Video Codec", 2018 DATA COMPRESSION CONFERENCE, IEEE, 27 March 2018 (2018-03-27), pages 3 - 12, XP033376037, DOI: 10.1109/DCC.2018.00008

## Description

### CROSS-REFERENCE TO RELATED APPLICATIONS

This application claims the benefit of European Provisional Patent Application No. EP22305490.9, filed April 8, 2022.

### BACKGROUND

Video coding systems may be used to compress digital video signals, e.g., to reduce the storage and/or transmission bandwidth needed for such signals. Video coding systems may include, for example, block-based, wavelet-based, and/or object-based systems.

### SUMMARY

Systems, methods, and instrumentalities are disclosed for performing reduction of film grain patterns. An example device (e.g., a device for video decoding) may include a processor configured to perform one or more actions. The device may obtain film grain pattern priority information associated with a plurality of film grain patterns for a block. The device may determine, based on the film grain pattern priority information, a reduced set of film grain patterns, from the plurality of film grain patterns, on which to perform a film grain pattern analysis. The device may perform the film grain pattern analysis on the reduced set of film grain patterns. The device may select, based on the film grain pattern analysis, a film grain pattern, from the reduced set of film grain patterns, to apply to a pixel component of the block. The device may apply the selected film grain pattern to the pixel component of the block.

The device may receive a supplemental enhancement information (SEI) message comprising a list of parameters. The device may determine that the reduced set of film grain patterns comprises film grain patterns associated with a number of parameters that are listed first in the SEI message. Each of the film grain patterns of the plurality of film grain patterns may be associated with a corresponding weight. The device may determine that the reduced set of film grain patterns comprises a number of film grain patterns, of the plurality of film grain patterns, with the greatest corresponding weight.

The corresponding weight of a given film grain pattern may be based on at least one of: a sum of intensity interval sizes associated with the given film grain pattern; a number of pixels to which the given film grain pattern will be applied; a scaling factor associated with the given film grain pattern; an intensity value associated with the given film grain pattern; or a weighted average of parameter values associated with the given film grain pattern.

A first film grain pattern of the reduced set of film grain patterns may be associated with a first set of film grain parameters. A second film grain pattern of the reduced set of film grain patterns may be associated with a second set of film grain parameters. The device may receive a supplemental enhancement information (SEI) message that indicates a third set of film grain parameters. The device may determine a first difference between the first set of film grain parameters and the third set of film grain parameters, and a second difference between the second set of film grain parameters and the third set of film grain parameters. On a condition that the first difference is less than the second difference, the device may select the first film grain pattern to apply to the pixel component of the block. On a condition that the second difference is less than the first difference, the device may select the second film grain pattern to apply to the pixel component of the block.

The device may determine a scaling factor associated with the selected film grain pattern. The device may apply the scaling factor to the selected film grain pattern. The film grain pattern priority information may indicate: a rule for prioritizing the plurality of film grain patterns, and/or a maximum number of film grain patterns that the reduced set of film grain patterns may include. The pixel component of the block may be a pixel intensity component.

A method (e.g., for video decoding) may involve obtaining film grain pattern priority information associated with a plurality of film grain patterns for a block. The method may involve determining, based on the film grain pattern priority information, a reduced set of film grain patterns, from the plurality of film grain patterns, on which to perform a film grain pattern analysis. The method may involve performing the film grain pattern analysis on the reduced set of film grain patterns. The method may involve selecting, based on the film grain pattern analysis, a film grain pattern, from the reduced set of film grain patterns, to apply to a pixel component of the block. The method may involve applying the selected film grain pattern to the pixel component of the block.

The method may involve receiving a supplemental enhancement information (SEI) message comprising a list of parameters. Determining, based on the film grain pattern priority information, the reduced set of film grain patterns may involve determining that the reduced set of film grain patterns comprises film grain patterns associated with a number of parameters that are listed first in the SEI message. Each of the film grain patterns of the plurality of film grain patterns may be associated with a corresponding weight. Determining, based on the film grain pattern priority information, the reduced set of film grain patterns may involve determining that the reduced set of film grain patterns comprises a number of film grain patterns, of the plurality of film grain patterns, with the greatest corresponding weight.

The corresponding weight of a given film grain pattern may be based on at least one of: a sum of intensity interval sizes associated with the given film grain pattern; a number of pixels to which the given film grain pattern will be applied; a scaling factor associated with the given film grain pattern; an intensity value associated with the given film grain pattern; or a weighted average of parameter values associated with the given film grain pattern.

A first film grain pattern of the reduced set of film grain patterns may be associated with a first set of film grain parameters. A second film grain pattern of the reduced set of film grain patterns may be associated with a second set of film grain parameters. The method may involve receiving a supplemental enhancement information (SEI) message that indicates a third set of film grain parameters. Performing the film grain pattern analysis on the reduced set of film grain patterns may involve determining a first difference between the first set of film grain parameters and the third set of film grain parameters, and a second difference between the second set of film grain parameters and the third set of film grain parameters.

Selecting, based on the film grain pattern analysis, the film grain pattern to apply to the pixel component of the block may involve: on a condition that the first difference is less than the second difference, selecting the first film grain pattern to apply to the pixel component of the block; and on a condition that the second difference is less than the first difference, selecting the second film grain pattern to apply to the pixel component of the block. The method may involve determining a scaling factor associated with the selected film grain pattern. The method may involve applying the scaling factor to the selected film grain pattern.

An example device (e.g., a device for video encoding) may include a processor configured to perform one or more actions. The device may generate a set of film grain parameters associated with a video image. The device may obtain film grain pattern priority information. The device may generate a supplemental enhancement information (SEI) message associated with the video image. The SEI message may include the set of film grain parameters associated with the video image and the film grain pattern priority information. The device may encode the video image to generate an encoded video image. The device may send the SEI message and the encoded video image.

The film grain pattern priority information may indicate a reduced set of film grain parameters. The reduced set of film grain parameters may include a number of film grain parameters that are listed first in the SEI message. Each film grain parameter in the set of film grain parameters may be associated with a corresponding weight. The film grain pattern priority information may indicate a reduced set of film grain parameters. The reduced set of film grain parameters may include a number of film grain parameters with the greatest corresponding weight.

Systems, methods, and instrumentalities described herein may involve a decoder.

### BRIEF DESCRIPTION OF THE DRAWINGS

FIG. 1A is a system diagram illustrating an example communications system in which one or more disclosed embodiments may be implemented.
FIG. 1B is a system diagram illustrating an example wireless transmit/receive unit (WTRU) that may be used within the communications system illustrated in FIG. 1A according to an embodiment.
FIG. 1C is a system diagram illustrating an example radio access network (RAN) and an example core network (CN) that may be used within the communications system illustrated in FIG. 1A according to an embodiment.
FIG. 1D is a system diagram illustrating a further example RAN and a further example CN that may be used within the communications system illustrated in FIG. 1A according to an embodiment.
FIG. 2 illustrates an example video encoder.
FIG. 3 illustrates an example video decoder.
FIG. 4 illustrates an example of a a system in which various aspects and examples may be implemented.
FIG. 5 shows an example of grain models within video coding.
FIG. 6 shows an example of a block diagram of frame grain usage in a video coding framework.
FIG. 7 shows an example of a film grain synthesis block diagram.
FIG. 8 shows an example of a diagram of pattern adaption.
FIG. 9 illustrates example film grain supplemental enhancement information (SEI) modification.
FIG. 10 illustrates an example of video transcoding with film grain metadata conversion.

### DETAILED DESCRIPTION

A more detailed understanding may be had from the following description, given by way of example in conjunction with the accompanying drawings.

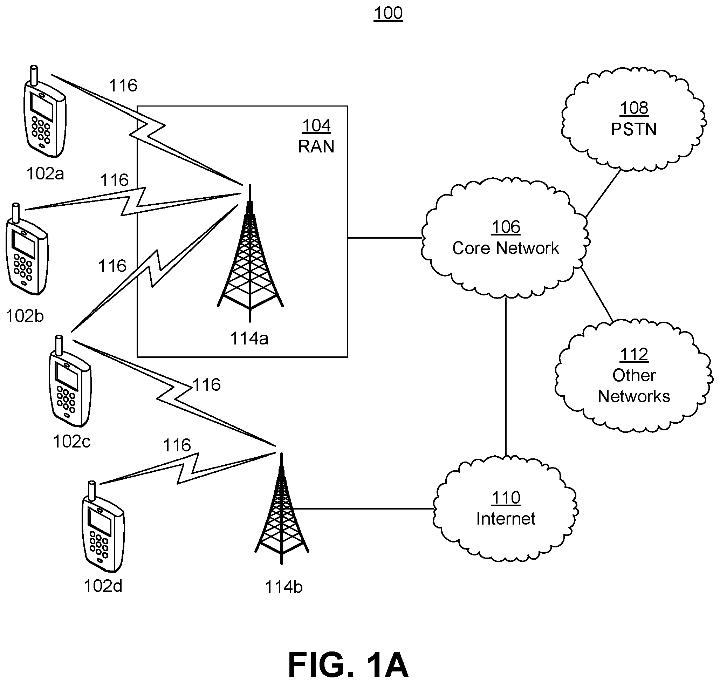

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

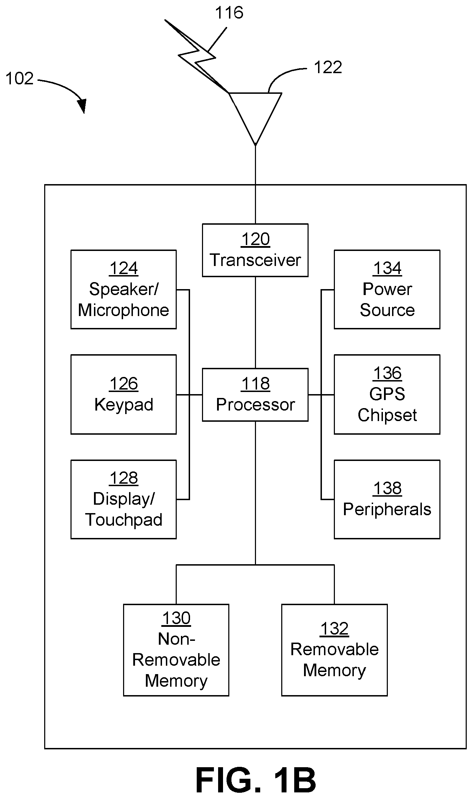

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

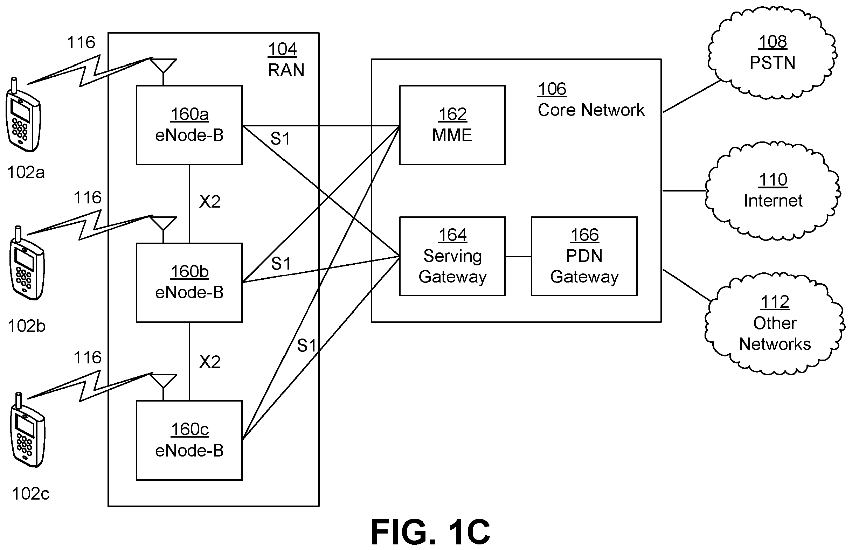

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11 af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

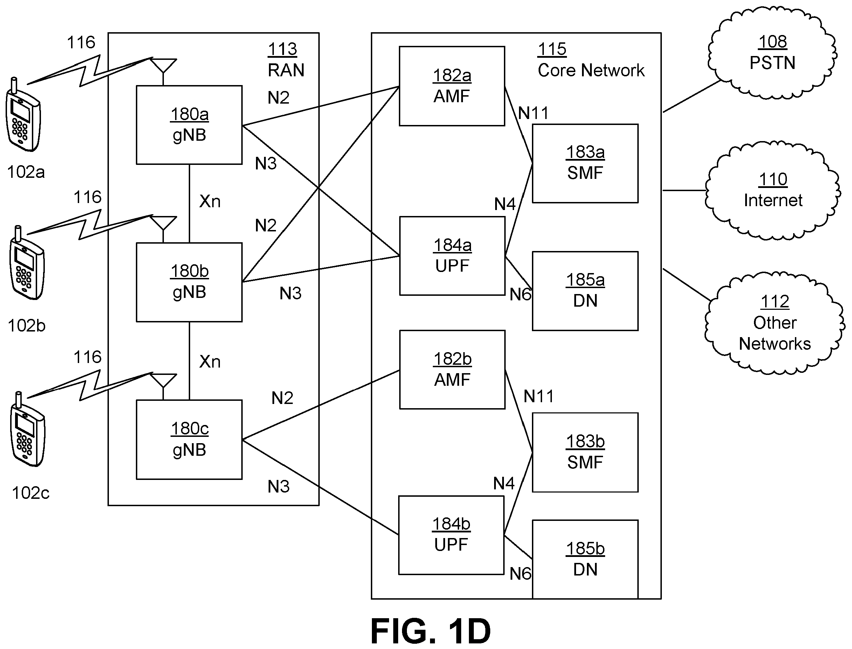

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

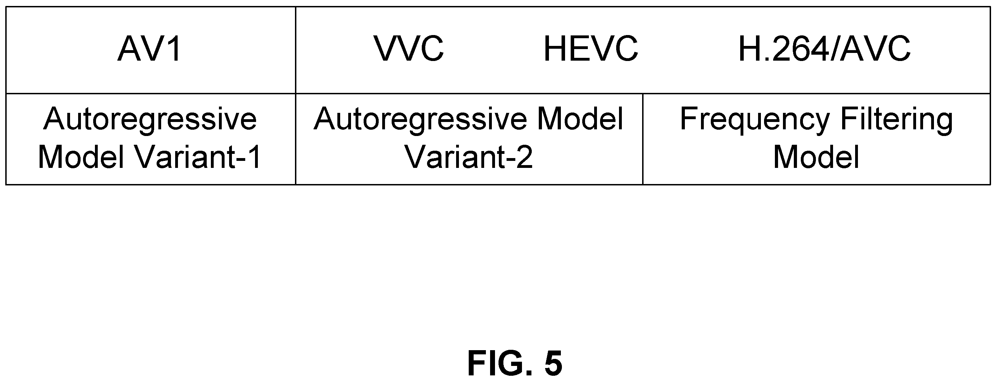

The aspects described and contemplated in this application may be implemented in many different forms. FIGs. 5-10 described herein may provide some examples, but other examples are contemplated. The discussion of FIGs. 5-10 does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various examples to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

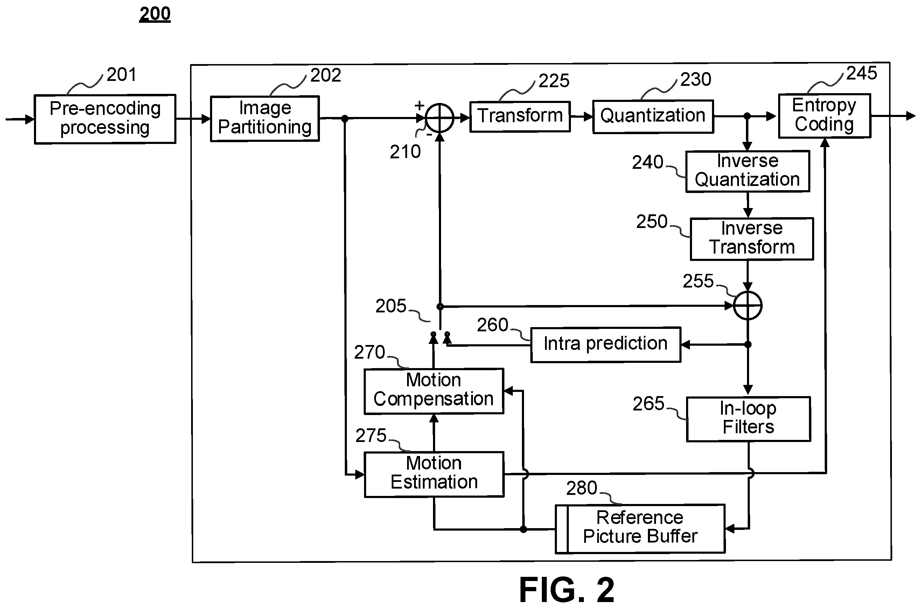

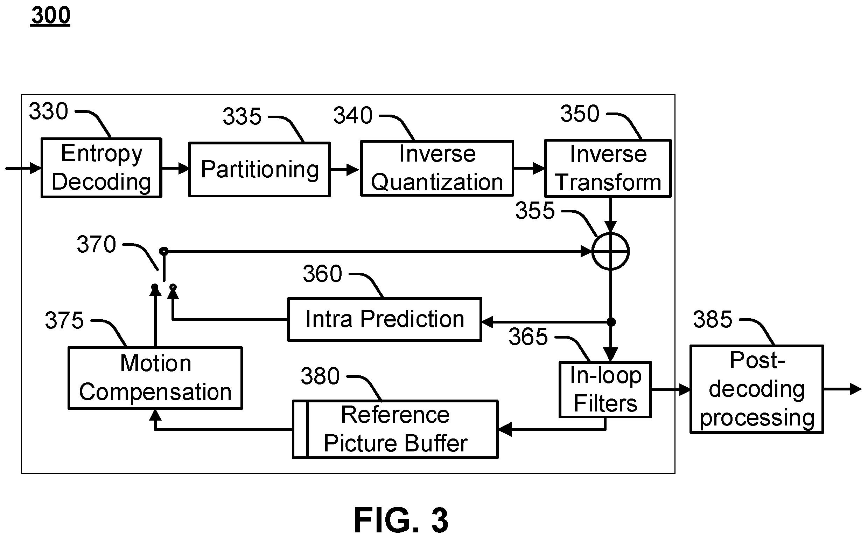

Various methods and other aspects described in this application may be used to modify modules, for example, decoding modules, of a video encoder 200 and decoder 300 as shown in FIG. 2 and FIG. 3. Moreover, the subject matter disclosed herein may be applied, for example, to any type, format or version of video coding, whether described in a standard or a recommendation, whether pre-existing or future-developed, and extensions of any such standards and recommendations. Unless indicated otherwise, or technically precluded, the aspects described in this application may be used individually or in combination.

Various numeric values are used in examples described the present application, such as 0, 1, 2, 3, 4, 5, 8, 16, 32, 64, 256, etc. These and other specific values are for purposes of describing examples and the aspects described are not limited to these specific values.

FIG. 2 is a diagram showing an example video encoder. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream. The pre-processing may include film grain analysis, in which grain parameters may be estimated. It may include denoising e.g., to ease bit-rate reduction. Grain estimation may be performed before encoding (e.g., or added manually). Encoding may reduce noise (e.g., due to quantization) and grain. In examples, a denoiser may remove grain before encoding and after having estimated the grain parameters.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

FIG. 3 is a diagram showing an example of a video decoder. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which may be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380).

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream. In an example, the decoded images (e.g., after application of the in-loop filters (365) and/or after post-decoding processing (385), if post-decoding processing is used) may be sent to a display device for rendering to a user.

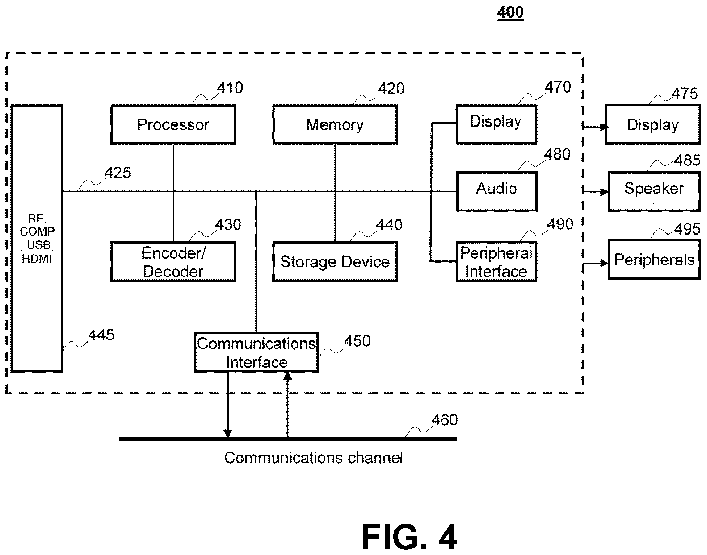

FIG. 4 is a diagram showing an example of a system in which various aspects and examples described herein may be implemented. System 400 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various examples, the system 400 is communicatively coupled to one or more other systems, or other electronic devices, via, for example, a communications bus or through dedicated input and/or output ports. In various examples, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various examples, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some examples, memory inside of the processor 410 and/or the encoder/decoder module 430 is used to store instructions and to provide working memory for processing that is needed during encoding or decoding. In other examples, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several examples, an external non-volatile flash memory is used to store the operating system of, for example, a television. In at least one example, a fast external dynamic volatile memory such as a RAM is used as working memory for video encoding and decoding operations.

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various examples, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain examples, (iv) demodulating the down-converted and band-limited signal, (v) performing error correction, and/or (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. In one set-top box example, the RF portion and its associated input processing element receives an RF signal transmitted over a wired (for example, cable) medium, and performs frequency selection by filtering, down-converting, and filtering again to a desired frequency band. Various examples rearrange the order of the above-described (and other) elements, remove some of these elements, and/or add other elements performing similar or different functions. Adding elements can include inserting elements in between existing elements, such as, for example, inserting amplifiers and an analog-to-digital converter. In various examples, the RF portion includes an antenna.

The USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the data stream as necessary for presentation on an output device.

Various elements of system 400 may be provided within an integrated housing, Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various examples, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these examples is typically connected to an access point or router that provides access to external networks including the Internet for allowing streaming applications and other over-the-top communications. Other examples provide streamed data to the system 400 using a set-top box that delivers the data over the HDMI connection of the input block 445. Still other examples provide streamed data to the system 400 using the RF connection of the input block 445. As indicated above, various examples provide data in a non-streaming manner. Additionally, various examples use wireless networks other than Wi-Fi, for example a cellular network or a Bluetooth^{®} network.

The system 400 can provide an output signal to various output devices, including a display 475, speakers 485, and other peripheral devices 495. The display 475 of various examples includes one or more of, for example, a touchscreen display, an organic light-emitting diode (OLED) display, a curved display, and/or a foldable display. The display 475 may be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples, one or more of a stand-alone digital video disc (or digital versatile disc) (DVD, for both terms), a disk player, a stereo system, and/or a lighting system. Various examples use one or more peripheral devices 495 that provide a function based on the output of the system 400. For example, a disk player performs the function of playing the output of the system 400.

In various examples, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various examples, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various examples in which the display 475 and speakers 485 are external components, the output signal may be provided via dedicated output connections, including, for example, HDMI ports, USB ports, or COMP outputs.

The examples may be carried out by computer software implemented by the processor 410 or by hardware, or by a combination of hardware and software. As a non-limiting example, the examples may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various examples, such processes include one or more of the processes typically performed by a decoder, for example, entropy decoding, inverse quantization, inverse transformation, and differential decoding. In various examples, such processes also, or alternatively, include processes performed by a decoder of various implementations described in this application, for example, a device may obtain film grain pattern priority information associated with a plurality of film grain patterns for a block. The device may determine, based on the film grain pattern priority information, a reduced set of film grain patterns, from the plurality of film grain patterns, on which to perform a film grain pattern analysis. The device may perform the film grain pattern analysis on the reduced set of film grain patterns. The device may select, based on the film grain pattern analysis, a film grain pattern, from the reduced set of film grain patterns, to apply to a pixel component of the block. The device may apply the selected film grain pattern to the pixel component of the block, etc.

As further examples, in one example "decoding" refers only to entropy decoding, in another example "decoding" refers only to differential decoding, and in another example "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various examples, such processes include one or more of the processes typically performed by an encoder, for example, partitioning, differential encoding, transformation, quantization, and entropy encoding. In various examples, such processes also, or alternatively, include processes performed by an encoder of various implementations described in this application, for example, a device may generate a set of film grain parameters associated with a video image. The device may obtain film grain pattern priority information. The device may generate a supplemental enhancement information (SEI) message associated with the video image. The SEI message may include the set of film grain parameters associated with the video image and the film grain pattern priority information. The device may encode the video image to generate an encoded video image. The device may send the SEI message and the encoded video image.

As further examples, in one example "encoding" refers only to entropy encoding, in another example "encoding" refers only to differential encoding, and in another example "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein, for example, coding syntax on number of intensity intervals, number of model values, grain parameters, grain identification, scaling factor, etc., are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one example" or "an example" or "one implementation" or "an implementation", as well as other variations thereof, means that a particular feature, structure, characteristic, and so forth described in connection with the example is included in at least one example. Thus, the appearances of the phrase "in one example" or "in an example" or "in one implementation" or "in an implementation", as well any other variations, appearing in various places throughout this application are not necessarily all referring to the same example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. Encoder signals may include, for example, number of intensity intervals, number of model values, grain parameters, grain identification, scaling factor, etc. In this way, in an example the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various examples. It is to be appreciated that signaling may be accomplished in a variety of ways. For example, one or more syntax elements, flags, and so forth are used to signal information to a corresponding decoder in various examples. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described example. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on, or accessed or received from, a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g., using a monitor, screen, or other type of display) a resulting image (e.g., an image from residual reconstruction of the video bitstream). The TV, set-top box, cell phone, tablet, or other electronic device may receive a signal including an encoded image and perform decoding.

Feature(s) associated with video compression, distribution, and/or rendering are provided herein. Film grain modeling may include using film grain metadata and/or implementation adaptation (e.g., for reducing complexity). Film grain metadata and/or implementation adaptation may be used for adaptation between different codecs and/or between different models.

The synthesis of film grain may take place in the post-decoding process.

Film grain metadata may be defined through supplemental enhancement information (SEI) messages (e.g., versatile supplemental enhancement information (VSEI) messages) for coded video bitstreams. In examples, film grain syntax may be integrated in a frame header and the film grain metadata may be a part of the core codec specification. Support for film grain may be specified in different ways. Different syntax and semantics may be used depending on a codec and/or on a model. Since different models may be used (e.g., as shown in FIG. 5), synthesis process and film grain blending may be defined differently.

FIG. 5 shows an example of grain models within video coding.

Feature(s) associated with film grain post-processing related to the memory, etc. are described herein.

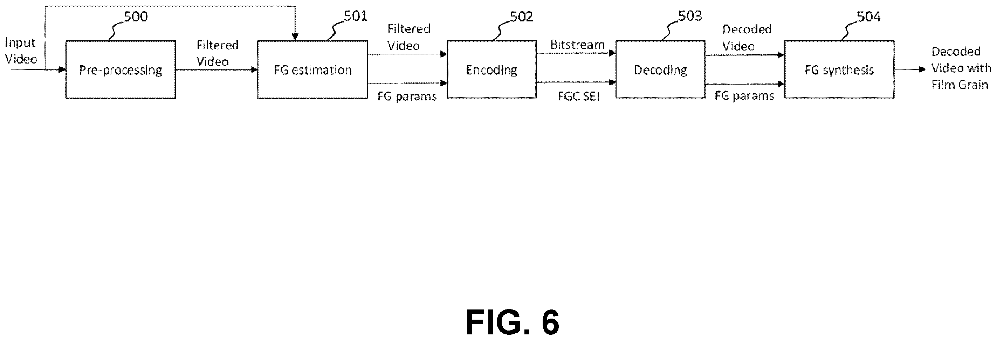

FIG. 6 shows an example of a block diagram of film grain usage in a video coding framework. As depicted in FIG. 6, at 500, pre-processing may be performed (e.g., input video data may be pre-processed). At 501, film grain estimation may be performed (e.g., using the input video data and the filtered video from the output of the pre-processing block). At 502, the filtered video and film grain parameters (e.g., from the output of the film grain estimation block) may be encoded. At 503, the bitstream and film grain parameters encoded in the form of film grain characteristics (FGC) SEI message (e.g., from the output of the encoding block) may be decoded. At 504, film grain synthesis may be performed (e.g., the film grain may be added to the decoded image).

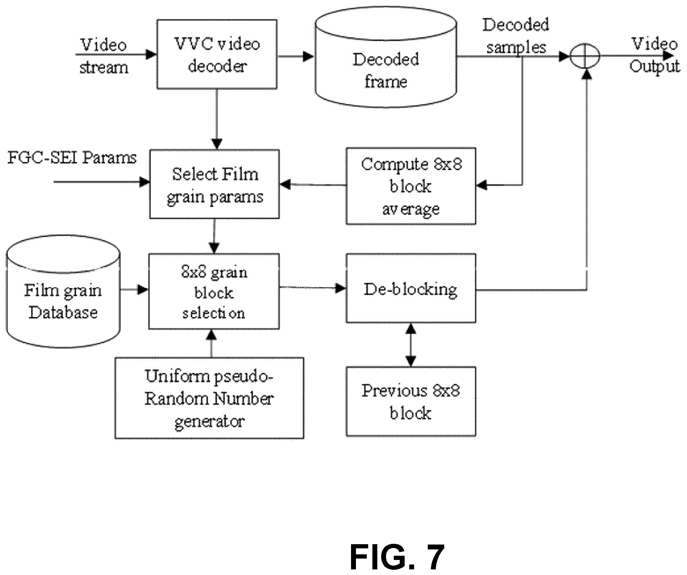

FIG. 7 shows an example of a film grain synthesis block diagram. As shown in FIG. 7, SEI film grain synthesis may be used. SEI film grain synthesis may involve using an 8x8 subblock. In examples, a different subblock size (any subblock size) may be used. The decoder may output a decoded frame and film grain characteristics SEI (e.g., film grain parameters). For a color channel (e.g., color channel such as Luma, Chroma Cb, Chroma Cr), based on an image block average (e.g., 8x8 block average, 16x16 block average, 8x1 block average, 5x2 block average, a pixel average, etc.), appropriate grain parameters may be selected (e.g., based on the film grain parameters in the SEI message). An 8x8 (e.g., or 16x16, etc.) grain subblock may be selected from a pre-computed film grain database, including film grain patterns defined for a larger block size, which may be deblocked (e.g., optionally deblocked) to reduce blocking artifacts in grain generation. The grain may be added/blended to the image. The selection may be based on the SEI and average block intensity value as described herein. The SEI may define multiple grain parameters to use (e.g., one for each intensity interval).

In the SEI frequency filtering mode, to generate grain patterns, the process may involve a pseudorandom generator to generate a 64x64 block and an inverse frequency transform (e.g., inverse discrete cosine transform (IDCT)). In the auto regression mode, a 64x64 block may be computed using a random number generator. Different grain patterns may be obtained by different model parameters defined in the SEI. In examples, the number of different patterns may be one per component. The process may be precomputed once per frame or once at initialization. The process may be precomputed in read-only memory (ROM) and loaded into execution memory. In examples, if the grain is present in an original video, the encoder may estimate the grain parameters in a pre-processing step (e.g., by analyzing the grain). The parameters may be added manually. For example, the parameters may be added by adding the SEI message with the parameters (e.g., the correct parameters) to the stream or by providing appropriate parameters to the encoder that may add the SEI.

In the SEI film grain generator (e.g., film grain synthesizer that is compatible with FGC SEI messages), one or more patterns (e.g., multiple patterns) may be defined per image, with parameters defined in the film grain characteristics SEI message. The maximum number of available patterns (e.g., simultaneously available patterns) per frame may be fixed and its value may be high. For example, ten different patterns per frame may be defined in the SEI message. The ten patterns may be loaded into a memory (e.g., fast memory) to cope with frame output frequency constraints. A larger amount of memory may be needed to store the patterns. Reducing the maximum number of patterns used by a frame may reduce the cost of a film grain synthesizer.

An example framework to reduce the number of different noise patterns (e.g., film grain patterns) from those defined in the film grain characteristics SEI message is provided herein. The synthesized film grain may use the reduced number of noise patterns, which should match (e.g., visually) the film grain generation with specified patterns (e.g., all specified patterns).

At the encoder (e.g., encoder stage), the film grain parameters may be modified, for example, to generate an output SEI message that includes a reduced number of film grain patterns (e.g., a smaller number of film grain patterns, or a subset of film grain patterns determined based on an SEI message). The modification may be applied between film grain analysis and the SEI (e.g., writing into the bitstream). For example, film grain analysis may be performed on an input video. The film grain analysis may produce input film grain parameters. The input film grain parameters may be adapted and, using the adapted film grain parameters, the SEI may be generated and encoded. The output (e.g., output bitstream) may include output film grain parameters (e.g., that may be included in an FGC SEI message). In examples, if the film grain parameters are provided as input to the encoder (e.g., manually estimated), the film grain parameters may not be estimated at the encoder. In such a case, film grain analysis may be skipped and input film grain parameters may be provided to the encoder.

At the transcoding stage (e.g., between encoding and decoding) SEI may be modified. At the decoder, the SEI may be modified, or, in the film grain synthesizer, the SEI may be interpreted and applied.

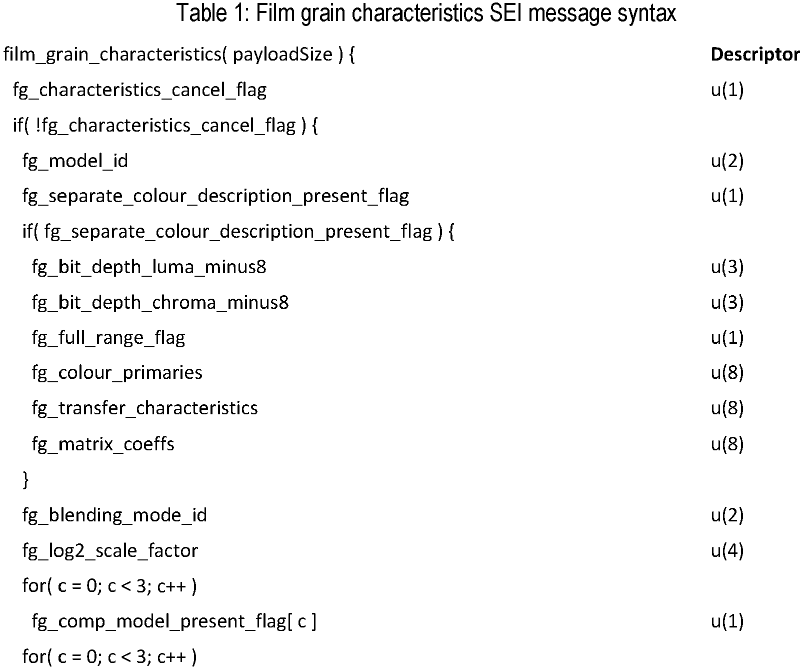

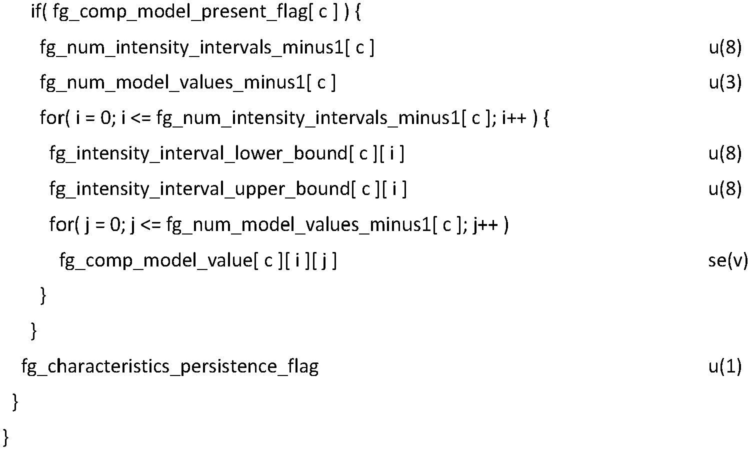

Table 1 may define the film grain characteristics SEI message. Table 1 may define the parameters of the grain, such as where the grain generation patterns are defined based on their model parameters, for intensity intervals (e.g., every intensity interval) of the component value of the input image.

Example semantics of the different parameters are summarized in Table 2, where c is the component index and may vary from 0 to 2, with 0 being the luminance, and 1 and 2 being the chrominance channels.

**Table 2: semantics of film grain characteristics parameters**

| | | |
|---|---|---|
| parameter name | fg_model_id = 0 | fg_model_id = 1 |
| | frequency filtering | auto-regressive |
| g_num_intensity_intervals_minus1[ c ] | plus 1 specifies the number of intensity intervals for which a specific set of model values has been estimated. | |
| fg_num_model_values_minus1[ c ] | plus 1 specifies the number of model values present for each intensity interval in which the film grain has been modelled. The value of fg_num _model_values_minus1[ c ] shall be in the range of 0 to 5, inclusive. | |
| | typically 3 | |
| fg_intensity_interval_lower_bound[ c ][ i ] | specifies the lower / upper bound of the i-th intensity interval for which the set of model values applies. | |
| fg_intensity_interval_upper_bound[ c ][ i ] | | |
| fg_comp_model_value[ c ][ i ][ j ] | specifies the j-th model value for the colour component c and the i-th intensity interval. | |
| fg_comp_model_value[ c ][ i ][ 0 ] | scaling factor (or gain) to apply to the grain pattern | |
| fg_comp_model_value[ c ][ i ][ 1 ] | [0, 16]; indicates the horizontal high cut frequency to be used to filter the DCT of a block | the first order spatial correlation for neighbouring samples (x - 1, y ) and ( x, y - 1 ) |
| fg_comp_model_value[ c ][ i ][ 2 ] | [0, 16]; indicates the vertical high cut frequency to be used to filter the DCT of a block | indicates the colour correlation between consecutive colour components |
| fg_comp_model_value[ c ][ i ][ 3 ] | [0, 16]; indicates the horizontal low cut frequency to be used to filter the DCT of a block | first order spatial correlation for neighbouring samples ( x - 1, y - 1) and ( x + 1, y - 1 ) |
| fg_comp_model_value[ c ][ i ][ 4 ] | [0, 16]; indicates the vertical low cut frequency to be used to filter the DCT of a block | the aspect ratio of the modelled grain |
| fg_comp_model_value[ c ][ i ][ 5 ] | the colour correlation between consecutive colour components | the second order spatial correlation for neighbouring samples ( x, y - 2 ) and ( x - 2, y ) |

For film grain processing, a pattern to use may be determined for a location (e.g., each location) having intensity I[c], based on the intensity interval into which I[c] falls. In examples, if multi-grain generation is allowed, the intervals may be allowed to overlap and I[x] may fall into multiple intervals and multiple grains may be generated. If multi-grain generation is not allowed, the intervals may not overlap.

The process used to synthesize the film grain may depend on the values of film grain characteristic parameters, intensity I[c], and/or pixel intensity. A film grain synthesizer may be used.

If the grain pattern to use depends on the pixel intensity (e.g., pixel component intensity), a mapping Look-Up Table (LUT) may be used to map the value of I[c] to the grain pattern to use. In examples, a dense LUT may be used, which may define correspondence for values (e.g., every value) of the signal. If the bit-depth is high, this may involve (e.g., require) a high amount of memory to hold the LUT, and sub-sampling may be used. For example, the LUT may be limited to 256 values which may correspond to 8-bits sampling. In such a case, the signal may be scaled to 8-bits before the LUT, by truncating or rounding the high bit-depth value to a lower bit-depth.

The SEI may define which pattern fg_comp_model_value[ *c* ][ i ] to use for each intensity interval *[fg_intensity_interval_lower_bound[ c* ][ i ], *fg_intensity_interval_upper_bound[ c* ][ i ]]. I[ c ] may be the intensity of the image component c (e.g., luminance or chrominance value) of the current block or pixel (e.g., pixel component). To speed up the synthesis, a LUT may be pre-computed to map the intensity (e.g., image block value) to the model parameter index to use. As defined in Table 2, the model parameters may define a scaling factor *fg_comp_model_value[* c ][ i ][ 0 ] and a grain pattern *fg_comp_model_value[* c ][ i ][1...5] (e.g., *fg_comp_model_value[c][i][j],* with j varying from 1 to 5). This LUT *grain_param_id[ c* ][ l ] may be generated by: for a component c (e.g., each component c), the model parameters with index k and intensity intervals defined by *fg_intensity_interval_[lower*/*upper]_bound][ c* ][ k ] are processed. For an intensity value (e.g., each intensity value) of the interval, the LUT value may be set to the model parameter index k based on the following:

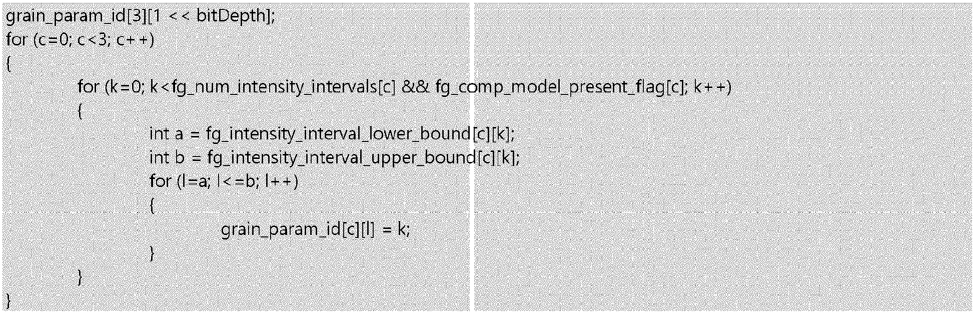

*grain_param_id* may represent the index of the parameters to use for the current intensity value, as defined in the SEI (e.g., if *grain_param_id[* c ][ i ] = p, the grain parameters fg_comp_model_value[ c ][ p ] may be used).

For pixel values (e.g., every pixel value or pixel component value) of the input frame I[ c ][ x ][ y ], to apply the film grain, the process may include one or more of the following (e.g., the process may be applied block by block for an average value of I[ c ] on the current block). The intensity value may be extracted. The index of the parameters may be read from the LUT. The scaling factor may be read from the parameters. The grain may be added to the pixel (e.g., or every pixel or pixel component of the block) based on the scaling factor and the model parameters corresponding to the index, as shown below.

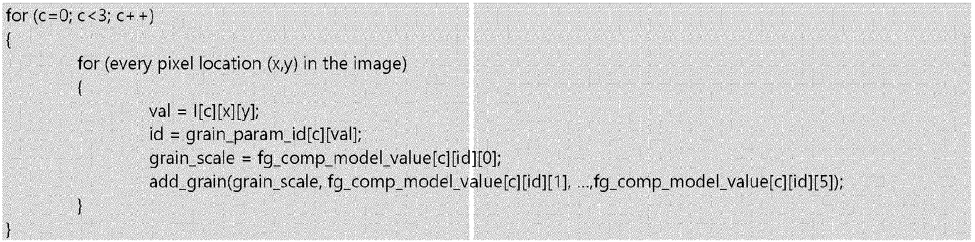

*add_grain()* may be the grain generation function, as described herein.

Mapping the image intensities to a reduced set of patterns (e.g., a subset of the patterns determined based on the SEI message, or a set of patterns with fewer patterns than determined based on the SEI message) may be implemented at the decoder, encoder, and/or transcoder, as described herein.

Mapping the image intensities to a reduced set of patterns may be provided. The SEI may define characteristics that are different per intensity interval. As defined herein, the parameter fg_comp_model_value[ *c* ][ i ][ j ], with j varying from 1 to 5 may have an impact on the grain pattern and the parameter fg_comp_model_value[ c ][ i ][ 0 ] may be a scaling factor and may take different values (e.g., without a significant impact on the complexity).

To limit complexity, the maximum number of allowed different patterns per component c may be defined as *max_pattern_num[* c ]. The minimum number of allowed different patterns per component c may be defined as *max_pattern_num[* c ] = {1, 1, 1} (e.g., one for each color component). In examples, the constraint may be relaxed to have more available patterns (e.g., {3, 2, 2}), where there are more patterns (e.g., 3) allocated to the luminance component than other components (e.g., 2, 2). The value {1, 1, 1} may be used with film grain synthesis that uses one (e.g., only one) grain pattern per component. The process of defining the mapping LUT may be modified as described herein.

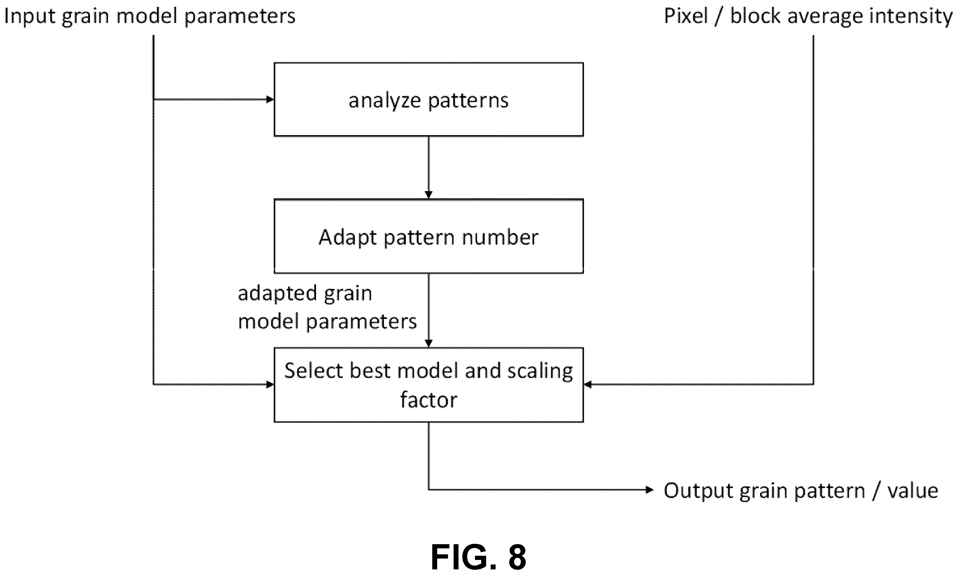

FIG. 8 shows an example of pattern adaption.

As shown in FIG. 8, the input grain parameters defined in the SEI may be analyzed and adapted to the pattern number. The pattern to use for any given intensity interval may be chosen from the adapted patterns, for example, by selecting the closest one in terms of the differences (e.g., sum of the absolute differences) between the input parameters and the parameters associated with the adapted patterns. An index for the chosen pattern may be stored in a LUT for intensity values (e.g., every intensity value) of the intensity interval, and the scaling factor may be adapted and stored in a scaling factor LUT, as shown below. In examples, the scaling factor may be mapped. The scaling factor may define a gain applied to the grain pattern. The scaling factor and the adapted pattern may be defined in the SEI (e.g., in the same parameter set). For one or more intervals (e.g., two given intervals), the parameters may define the same patterns and different scaling factors (e.g., two different scaling factors). In examples, the number of different patterns may be reduced, and the scaling factor may change. The scaling factor may be the same as input or may be adapted to the pattern, for example, if the pattern changes for the given intensity interval.

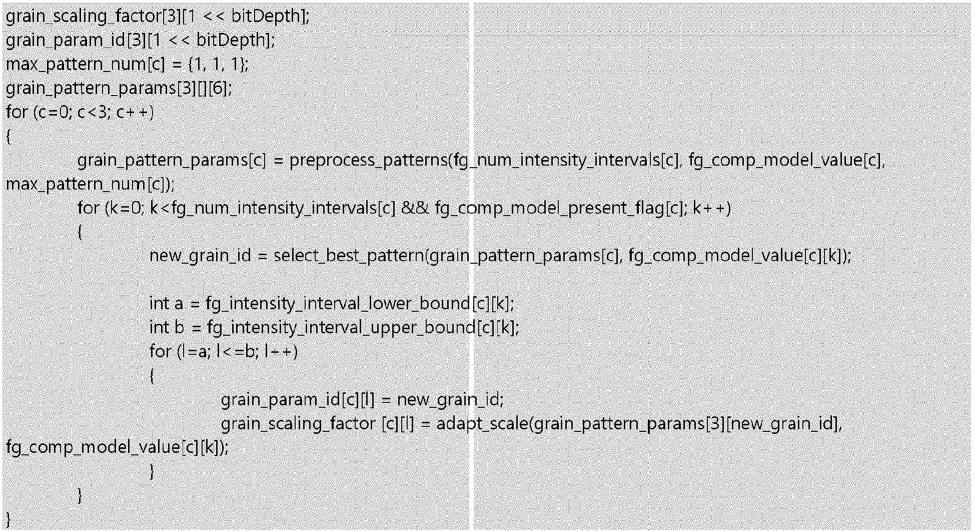

*grain_scaling_factor*[ 3 ][ ] may be the LUT of scaling factors for intensities (e.g., each intensity) adapted to the pattern. *max_pattern_num* may be the maximum number of patterns per component that may be used in the pattern reduction process. *grain_pattern_params* may be the adapted grain pattern parameters with the same semantics as *fg_comp_model_value.*

*preprocess_patterns* may be the process of analyzing the SEI parameters and reducing the number of different patterns to the maximum number of available patterns per component. *preprocess_pattems* may output the result in *grain_pattem_params.* This process may copy the *max_pattern_num[* c ] first pattern parameters of *fg_comp_model_value[* c ] in *grain_pattern_params[* c ]. The process of selecting parameters (e.g., the most important parameters) and ordering the parameters may be left to the discretion of the content creator that may compress the video content and create the original film grain SEI characteristics. The process of selecting parameters (e.g., the most important parameters) and ordering the parameters may be performed using a weighting technique, as described herein.

*select_best_pattern* may be a film grain pattern analysis performed on the reduced set (e.g., subset of film grain patterns, or smaller set of film grain patterns) in order to select the best film grain pattern out of the subset of film grain patterns. *select_best_pattern* may involve mapping the input SEI index to an index related to the adapted film grain pattern (e.g., reduced set of film grain patterns or subset of film grain patterns). The selection may be based on the difference between input parameters and adapted model parameters (e.g., the model parameters associated with the reduced set of film grain patterns). The adapted parameters associated with the minimal difference may be chosen. For example, a first set of adapted parameters may have a first difference from the input parameters and a second set of adapted parameters may have a second difference from the input parameters. In this case, on a condition that the first difference is less than the second difference, the film grain pattern associated with the first set of adapted parameters may be selected. Similarly, on a condition that the second difference is less than the first difference, the film grain pattern associated with the second set of adapted parameters may be selected. The difference may be computed as the maximum difference between parameter values (e.g., each parameter value), the sum of absolute differences, the sum of squared differences, or any other difference operation. The parameters to consider for computing the difference may not include the scaling parameter (e.g., scaling factor).

*adapt_scale* may be the process of adapting the scaling factor for the adapted pattern. If the grain parameters change, the scaling factor may be adapted based on the parameter modification (e.g., to give a similar grain look). In examples, the scaling factor adaptation process may include the direct copy of the input scaling factor as defined by *fg_comp_model_value[* c ][ k ][ 0 ].

For a pixel value (e.g., every pixel value or pixel component value) of the input frame I[ c ][ x ][ y ], to apply the film grain, the process may be similar to other processes described herein, except the *grain_scaling_factor*[ c ][ val ] LUT may be used instead of first parameter *fg_comp_model_value[* c ][ k ][ 0 ], and the model parameters *grain_pattern_params[* c ] may be used instead of input parameters *fg_comp_model_value[ c ],* as shown below (e.g., the process may be applied block-by-block for an average value of I[ c ] on the current block):

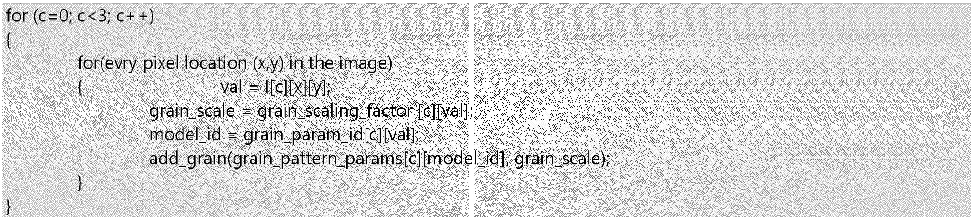

Feature(s) associated with selecting patterns to use are provided. An example of the process *preprocess_patterns* of remapping the input film grain characteristics fg_comp_model_value[ c ] into a reduced set of patterns is described herein. The reduced set of patterns (e.g., subset of film grain patterns, or smaller set of film grain patterns) may be selected based on film grain priority information (e.g., the film grain patterns associated with the first listed pattern parameters or associated with the most heavily weighted pattern parameters). For example, as shown above, the reduced set of patterns may include a copy of the *max_pattern_num[* c ] first pattern parameters of fg_comp_model_value[ c ] in *grain_pattem_params*[ c ]. If *max_pattern_num*[ c ] is greater or equal to the number of different input parameters, no adaptation may be used (e.g., needed) and the direct copy may be used.

Feature(s) associated with a copy of SEI parameters (e.g., first SEI parameters) are provided herein. The first unique patterns may be used. As described above, the first parameter of *fg_comp_model_value*[ c ][ k ] may be the scaling factor and may be discarded from the comparison functions (e.g., the scaling factor may be handled separately). Copying the first patterns may include filling the first different *max_pattern_num*[ c ] model parameters of *fg_comp_model_value*[ c ] into *grain_pattern_params*[ c ]. The intensity intervals may be scanned (e.g., until the maximum number of patterns is reached). The process may involve checking (e.g., first checking) if the pattern parameters exist (e.g., already exist) in the selected model parameters (e.g., different intervals may have the same grain parameters, but a different scaling factor). If the model parameters already exist in the selected patterns, the next interval may be processed. If the model parameters do not already exist in the selected patterns, the input parameters may be copied into the selected grain patterns and the number of found patterns may be incremented.

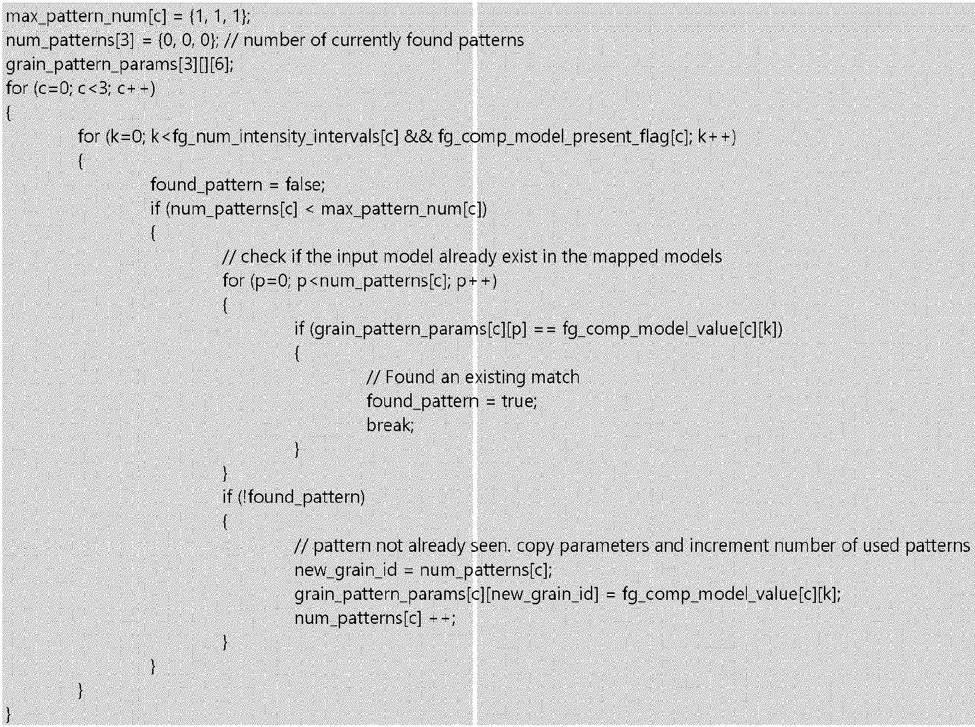

*num_pattems*[ c ] may be the number of currently found new patterns and *grain_pattern_params*[ c ] may be the selected model parameters.

In examples, the patterns may be selected based on a weighting value (e.g., the pattern(s) with the greatest corresponding weight may be selected). For every pattern, the parameters may be stored in a list and corresponding weight may be increased. The list may be sorted based on the weight (e.g., with most important patterns first) and the first *max_pattern_num*[ c ] parameters may be selected. The weighting may be sum of the interval sizes (e.g., intensity interval sizes) as shown below. The weighting may be related to the number of impacted pixels. The patterns impacting the greatest number of pixels may be preserved to reduce perceived modification of the pattern reduction process. In examples, the weighting may include other characteristics, such as the scaling factor, the average of scaling factors, the greatest intensity value of the intervals, the greatest average intensity of the intervals, and/or the actual number of impacted pixels (e.g., pixel components) in every interval (e.g., which may involve an analysis of the full input image, such as a histogram computation, prior to the pattern selection).

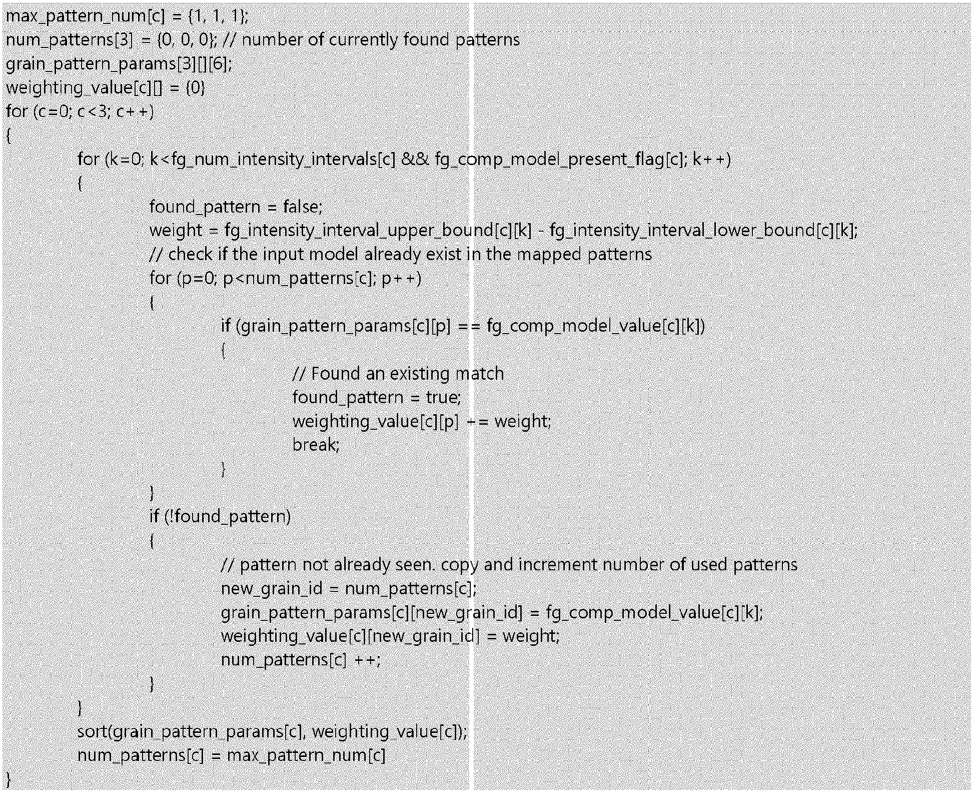

Feature(s) associated with computing a set of patterns are provided herein. In examples, to reduce the impact on the grain synthesis from reducing the number of patterns, the selected patterns may be adapted. For example, the set of patterns may be initialized by one of the processes described herein. A set of adapted patterns (e.g., reduced set of patterns) may be computed by combining input model parameters. For example, *grain_pattern_params*[ c ] may be obtained (e.g., as described herein). For every input model parameter *fg_comp_model_value*[ c ][ k ] that may be mapped to the pattern *grain_pattem_params*[ c ][ p ], a combination of these input model parameters may be used to compute adapted parameters *adapted_grain_pattern_params*[ c ][ p ]. For a scalar parameter (e.g., each scalar parameter), the combination may be, for example, an average, a weighted average based on the interval size, the intensity value, the scaling factor, etc.

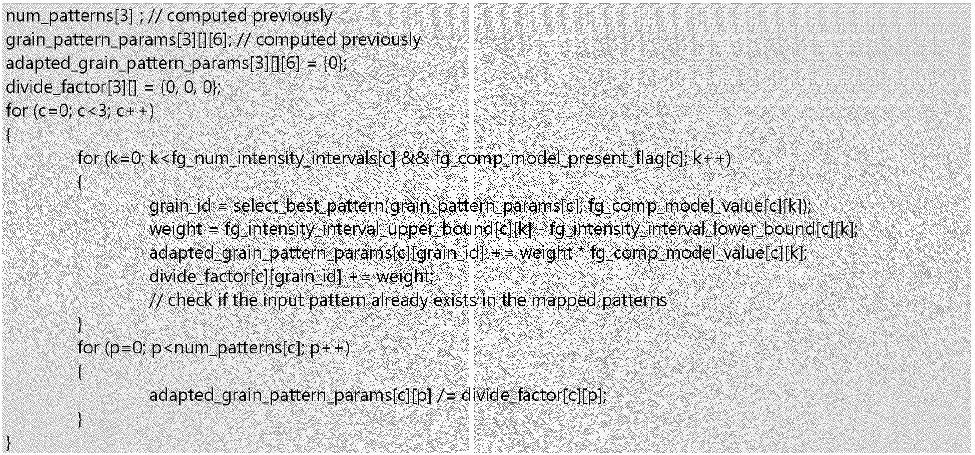

*adapted_grain_pattern_params*[ c ] may be the grain pattern parameters computed as the weighted average of input model parameters based on the previous pattern selection.

The adapted grain patterns parameters may be computed (e.g., directly) from input *fg_comp_model_value*[ c ] values based on a K-means process (e.g., to compute k values as centroids of m input values, where m > k.)

The patterns may be the result of an optimization process where a cost function is minimized (e.g., the sum of Euclidian distances between the statistic moment of different orders, frequency bandwidths, etc., between the grain patterns resulting from new parameters and the merged grain patterns). The cost function may include a weighting based on pattern usage. The optimization may be based on the difference between the rendering on the full picture using the new parameters and the rendering on the full picture using the original parameters.

Feature(s) associated with modifying the SEI are provided herein. The output SEI may be initialized with the input parameters. The number of different patterns may not be part of the SEI. A device may generate a set of film grain parameters associated with a video image. The device may generate an SEI message associated with the video image. The SEI message may include the set of film grain parameters associated with the video image. The device may modify the SEI message associated with the video image. The modified SEI message may include a reduced set (e.g., subset or smaller set) of the film grain parameters associated with the video image. The device may encode the video image to generate an encoded video image. The device may send the modified SEI message and the encoded video image. The parameter values may be modified for an intensity interval (e.g., every intensity interval k).

Feature(s) associated with generating the SEI are provided herein. The output SEI may be initialized with the input parameters. A device may generate a set of film grain parameters associated with a video image. The film grain parameters may include an associated priority information, such as a weight computed as described herein. The device may generate an SEI message associated with the video image. The SEI message may include the set of film grain parameters associated with the video image. The SEI message may include a priority information associated with each film grain parameter. Such priority information could be the order in which the parameters are included in the SEI message. For example, the most important (e.g., highest weighted parameters) may be listed first in the SEI message. The device may send the SEI message and the encoded video image.

Feature(s) associated with modifying the SEI are provided herein. The output SEI may be initialized with the input parameters. A device may generate a set of film grain parameters associated with a video image. The SEI message may include the set of film grain parameters associated with the video image. The device may modify the SEI message associated with the video image. Priority information (e.g., a weight as described herein) may be computed for each grain parameter. The device may modify the SEI message associated with the video image. The modified SEI message may include the priority information associated with each film grain parameter. The priority information may be, for example, the order in which the parameters are included in the SEI message. For example, the most important parameters (e.g., parameters with the highest weights) may be included in the SEI message first (e.g., at the beginning of the SEI message). The device may send the modified SEI message and the encoded video image.

The index may be selected as described herein.

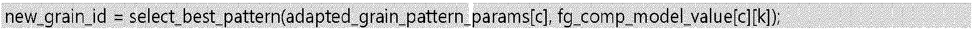

The grain parameters may be from the adapted parameters corresponding to the index.

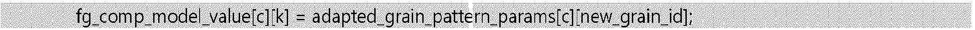

The scaling factor may be adapted.

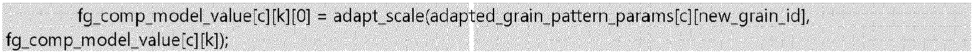

SEI may be converted into other film grain metadata format(s).

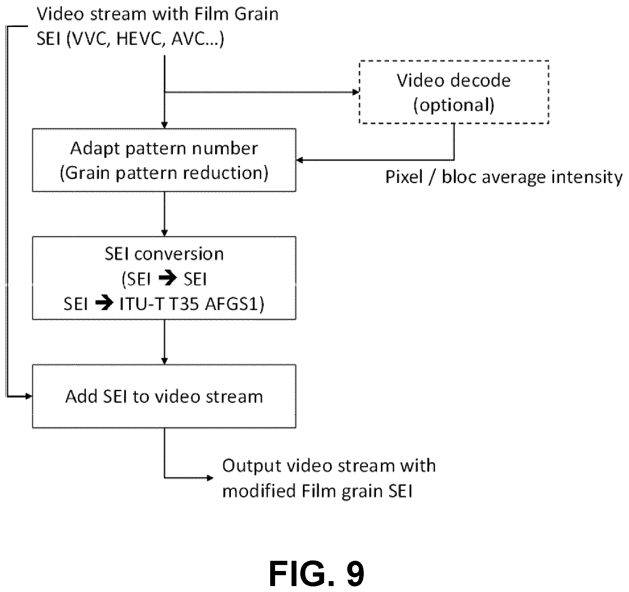

FIG. 9 illustrates an example of film grain SEI modification. If the film grain parameters have been adapted to reduce number of different patterns (e.g., to one single pattern), the pattern may be converted to (e.g., some other) film grain metadata that uses a single film grain pattern (e.g., the metadata format illustrated in FIG. 9).

AFGS1 (AOMedia film grain synthesis model) may be an autoregressive film grain synthesis model. The model may be indicated using registered or unregistered user data SEI messages.

The film grain characteristics SEI message may be converted into AFGS1 compatible metadata. For example, the SEI message may be converted after: reducing the number of different patterns to one (e.g., a single pattern); converting the scaling factor (e.g., which is typically a stepwise function) to a piecewise linear function; and/or adapting the model parameters from the SEI format to the AFGS1 format (e.g., if the frequency model is used in the SEI format). If the frequency model is used in the SEI format, a conversion (e.g., special conversion) may be performed. If the auto regression mode is used in the SEI, the conversion may be easier (e.g., simpler) because the film grain in AFGS1 uses an auto-regression model to generate a grain pattern.

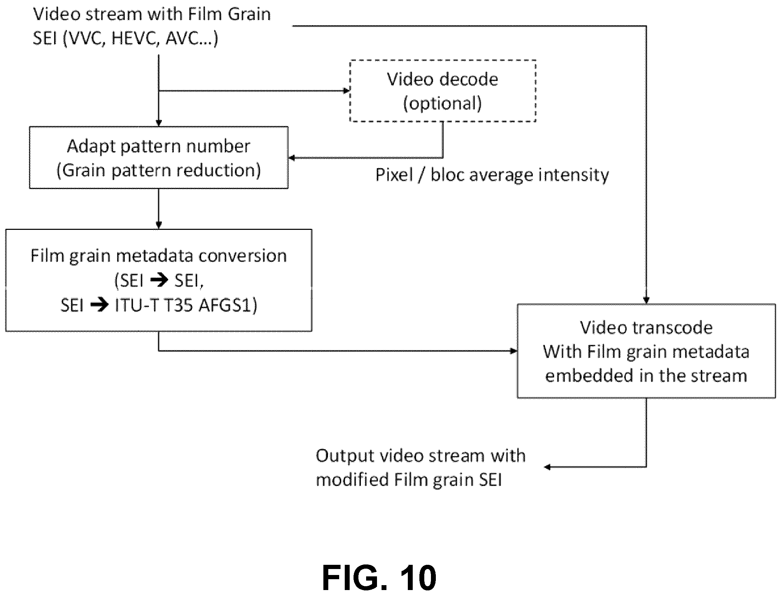

FIG. 10 illustrates an example of video transcoding with film grain metadata conversion. In a transcoding framework, a first stream including film grain characteristics SEI may be converted into a second stream including film grain metadata. In such a case, the film grain characteristics may be signaled in the second stream in AFGS1 metadata format and/or embedded in the stream, as illustrated in FIG. 10.

Systems, methods, and instrumentalities are disclosed for performing reduction of film grain patterns. An example device (e.g., a device for video decoding) may include a processor configured to perform one or more actions. The device may obtain film grain pattern priority information associated with a plurality of film grain patterns for a block. The device may determine, based on the film grain pattern priority information, a reduced set of film grain patterns, from the plurality of film grain patterns, on which to perform a film grain pattern analysis. The device may perform the film grain pattern analysis on the reduced set of film grain patterns. The device may select, based on the film grain pattern analysis, a film grain pattern, from the reduced set of film grain patterns, to apply to a pixel component of the block. The device may apply the selected film grain pattern to the pixel component of the block.

The device may receive a supplemental enhancement information (SEI) message comprising a list of parameters. The device may determine that the reduced set of film grain patterns comprises film grain patterns associated with a number of parameters that are listed first in the SEI message. Each of the film grain patterns of the plurality of film grain patterns may be associated with a corresponding weight. The device may determine that the reduced set of film grain patterns comprises a number of film grain patterns, of the plurality of film grain patterns, with the greatest corresponding weight.

The corresponding weight of a given film grain pattern may be based on at least one of: a sum of intensity interval sizes associated with the given film grain pattern; a number of pixels to which the given film grain pattern will be applied; a scaling factor associated with the given film grain pattern; an intensity value associated with the given film grain pattern; or a weighted average of parameter values associated with the given film grain pattern.

A first film grain pattern of the reduced set of film grain patterns may be associated with a first set of film grain parameters. A second film grain pattern of the reduced set of film grain patterns may be associated with a second set of film grain parameters. The device may receive a supplemental enhancement information (SEI) message that indicates a third set of film grain parameters. The device may determine a first difference between the first set of film grain parameters and the third set of film grain parameters, and a second difference between the second set of film grain parameters and the third set of film grain parameters. On a condition that the first difference is less than the second difference, the device may select the first film grain pattern to apply to the pixel component of the block. On a condition that the second difference is less than the first difference, the device may select the second film grain pattern to apply to the pixel component of the block.

The device may determine a scaling factor associated with the selected film grain pattern. The device may apply the scaling factor to the selected film grain pattern. The film grain pattern priority information may indicate: a rule for prioritizing the plurality of film grain patterns, and/or a maximum number of film grain patterns that the reduced set of film grain patterns may include. The pixel component of the block may be a pixel intensity component.

A method (e.g., for video decoding) may involve obtaining film grain pattern priority information associated with a plurality of film grain patterns for a block. The method may involve determining, based on the film grain pattern priority information, a reduced set of film grain patterns, from the plurality of film grain patterns, on which to perform a film grain pattern analysis. The method may involve performing the film grain pattern analysis on the reduced set of film grain patterns. The method may involve selecting, based on the film grain pattern analysis, a film grain pattern, from the reduced set of film grain patterns, to apply to a pixel component of the block. The method may involve applying the selected film grain pattern to the pixel component of the block.

The method may involve receiving a supplemental enhancement information (SEI) message comprising a list of parameters. Determining, based on the film grain pattern priority information, the reduced set of film grain patterns may involve determining that the reduced set of film grain patterns comprises film grain patterns associated with a number of parameters that are listed first in the SEI message. Each of the film grain patterns of the plurality of film grain patterns may be associated with a corresponding weight. Determining, based on the film grain pattern priority information, the reduced set of film grain patterns may involve determining that the reduced set of film grain patterns comprises a number of film grain patterns, of the plurality of film grain patterns, with the greatest corresponding weight.

The corresponding weight of a given film grain pattern may be based on at least one of: a sum of intensity interval sizes associated with the given film grain pattern; a number of pixels to which the given film grain pattern will be applied; a scaling factor associated with the given film grain pattern; an intensity value associated with the given film grain pattern; or a weighted average of parameter values associated with the given film grain pattern.

A first film grain pattern of the reduced set of film grain patterns may be associated with a first set of film grain parameters. A second film grain pattern of the reduced set of film grain patterns may be associated with a second set of film grain parameters. The method may involve receiving a supplemental enhancement information (SEI) message that indicates a third set of film grain parameters. Performing the film grain pattern analysis on the reduced set of film grain patterns may involve determining a first difference between the first set of film grain parameters and the third set of film grain parameters, and a second difference between the second set of film grain parameters and the third set of film grain parameters.

Selecting, based on the film grain pattern analysis, the film grain pattern to apply to the pixel component of the block may involve: on a condition that the first difference is less than the second difference, selecting the first film grain pattern to apply to the pixel component of the block; and on a condition that the second difference is less than the first difference, selecting the second film grain pattern to apply to the pixel component of the block. The method may involve determining a scaling factor associated with the selected film grain pattern. The method may involve applying the scaling factor to the selected film grain pattern.

An example device (e.g., a device for video encoding) may include a processor configured to perform one or more actions. The device may generate a set of film grain parameters associated with a video image. The device may obtain film grain pattern priority information. The device may generate a supplemental enhancement information (SEI) message associated with the video image. The SEI message may include the set of film grain parameters associated with the video image and the film grain pattern priority information. The device may encode the video image to generate an encoded video image. The device may send the SEI message and the encoded video image.

The film grain pattern priority information may indicate a reduced set of film grain parameters. The reduced set of film grain parameters may include a number of film grain parameters that are listed first in the SEI message. Each film grain parameter in the set of film grain parameters may be associated with a corresponding weight. The film grain pattern priority information may indicate a reduced set of film grain parameters. The reduced set of film grain parameters may include a number of film grain parameters with the greatest corresponding weight.

An example method (e.g., for video encoding) may involve generating a set of film grain parameters associated with a video image. The method may involve obtaining film grain pattern priority information. The method may involve generating a supplemental enhancement information (SEI) message associated with the video image. The SEI message may include the set of film grain parameters associated with the video image and the film grain pattern priority information. The method may involve encoding the video image to generate an encoded video image. The method may involve sending the SEI message and the encoded video image.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A device, comprising:
a processor configured to:
obtain film grain pattern priority information associated with a plurality of film grain patterns for a block;
determine, based on the film grain pattern priority information, a reduced set of film grain patterns, from the plurality of film grain patterns, on which to perform a film grain pattern analysis;
perform the film grain pattern analysis on the reduced set of film grain patterns;
select, based on the film grain pattern analysis, a film grain pattern, from the reduced set of film grain patterns, to apply to a pixel component of the block; and
apply the selected film grain pattern to the pixel component of the block.

2. The device of claim 1, wherein:
the processor is further configured to receive a supplemental enhancement information (SEI) message comprising a list of parameters; and
the processor being configured to determine, based on the film grain pattern priority information, the reduced set of film grain patterns comprises the processor being configured to determine that the reduced set of film grain patterns comprises film grain patterns associated with a number of parameters that are listed first in the SEI message.

3. The device of claim 1, wherein each of the film grain patterns of the plurality of film grain patterns is associated with a corresponding weight, and wherein the processor being configured to determine, based on the film grain pattern priority information, the reduced set of film grain patterns comprises the processor being configured to determine that the reduced set of film grain patterns comprises a number of film grain patterns, of the plurality of film grain patterns, with the greatest corresponding weight.

4. The device of claim 3, wherein the corresponding weight of a given film grain pattern is based on at least one of:
a sum of intensity interval sizes associated with the given film grain pattern;
a number of pixels to which the given film grain pattern will be applied;
a scaling factor associated with the given film grain pattern;
an intensity value associated with the given film grain pattern; or
a weighted average of parameter values associated with the given film grain pattern.

5. The device of claim 1, wherein:
a first film grain pattern of the reduced set of film grain patterns is associated with a first set of film grain parameters;
a second film grain pattern of the reduced set of film grain patterns is associated with a second set of film grain parameters;
the processor is further configured to receive a supplemental enhancement information (SEI) message that indicates a third set of film grain parameters; and
the processor being configured to perform the film grain pattern analysis on the reduced set of film grain patterns comprises the processor being configured to determine a first difference between the first set of film grain parameters and the third set of film grain parameters, and a second difference between the second set of film grain parameters and the third set of film grain parameters.

6. The device of claim 5, wherein the processor being configured to select, based on the film grain pattern analysis, the film grain pattern to apply to the pixel component of the block comprises the processor being configured to:
on a condition that the first difference is less than the second difference, select the first film grain pattern to apply to the pixel component of the block; and
on a condition that the second difference is less than the first difference, select the second film grain pattern to apply to the pixel component of the block.

7. The device of claim 1, wherein the processor is further configured to:
determine a scaling factor associated with the selected film grain pattern; and
apply the scaling factor to the selected film grain pattern.

8. The device of claim 1, wherein the film grain pattern priority information indicates:
a rule for prioritizing the plurality of film grain patterns; and
a maximum number of film grain patterns that the reduced set of film grain patterns may include.

9. The device of claim 1, wherein the pixel component of the block comprises a pixel intensity component.

10. A method comprising:
obtaining film grain pattern priority information associated with a plurality of film grain patterns for a block;
determining, based on the film grain pattern priority information, a reduced set of film grain patterns, from the plurality of film grain patterns, on which to perform a film grain pattern analysis;
performing the film grain pattern analysis on the reduced set of film grain patterns;
selecting, based on the film grain pattern analysis, a film grain pattern, from the reduced set of film grain patterns, to apply to a pixel component of the block; and
applying the selected film grain pattern to the pixel component of the block.

11. The method of claim 10, wherein:
the method further comprises receiving a supplemental enhancement information (SEI) message comprising a list of parameters; and
determining, based on the film grain pattern priority information, the reduced set of film grain patterns comprises determining that the reduced set of film grain patterns comprises film grain patterns associated with a number of parameters that are listed first in the SEI message.

12. The method of claim 10, wherein each of the film grain patterns of the plurality of film grain patterns is associated with a corresponding weight, and wherein determining, based on the film grain pattern priority information, the reduced set of film grain patterns comprises determining that the reduced set of film grain patterns comprises a number of film grain patterns, of the plurality of film grain patterns, with the greatest corresponding weight.

13. The method of claim 12, wherein the corresponding weight of a given film grain pattern is based on at least one of:
a sum of intensity interval sizes associated with the given film grain pattern;
a number of pixels to which the given film grain pattern will be applied;
a scaling factor associated with the given film grain pattern;
an intensity value associated with the given film grain pattern; or
a weighted average of parameter values associated with the given film grain pattern.

14. The method of claim 10, wherein:
a first film grain pattern of the reduced set of film grain patterns is associated with a first set of film grain parameters;
a second film grain pattern of the reduced set of film grain patterns is associated with a second set of film grain parameters;
the method further comprises receiving a supplemental enhancement information (SEI) message that indicates a third set of film grain parameters; and
performing the film grain pattern analysis on the reduced set of film grain patterns comprises determining a first difference between the first set of film grain parameters and the third set of film grain parameters, and a second difference between the second set of film grain parameters and the third set of film grain parameters.

15. The method of claim 14, wherein selecting, based on the film grain pattern analysis, the film grain pattern to apply to the pixel component of the block comprises:
on a condition that the first difference is less than the second difference, selecting the first film grain pattern to apply to the pixel component of the block; and
on a condition that the second difference is less than the first difference, selecting the second film grain pattern to apply to the pixel component of the block.

## Patentansprüche

1. Vorrichtung, umfassend:
einen Prozessor, der eingerichtet ist zum:
Erhalten von Filmkörnungsstruktur-Prioritätsinformationen, die mit mehreren Filmkörnungsstrukturen für einen Block verknüpft sind;
Bestimmen, auf der Grundlage der Filmkörnungsstruktur-Prioritätsinformationen, eines reduzierten Satzes von Filmkörnungsstrukturen aus den mehreren Filmkörnungsstrukturen, an denen eine Filmkörnungsstrukturanalyse durchgeführt werden soll;
Durchführen der Filmkörnungsstrukturanalyse an dem reduzierten Satz von Filmkörnungsstrukturen;
Auswählen, auf der Grundlage der Filmkörnungsstrukturanalyse, einer Filmkörnungsstruktur aus dem reduzierten Satz von Filmkörnungsstrukturen, die auf eine Pixelkomponente des Blocks angewendet werden soll; und
Anwenden der ausgewählten Filmkörnungsstruktur auf die Pixelkomponente des Blocks.

2. Vorrichtung nach Anspruch 1, wobei:
der Prozessor des Weiteren dazu eingerichtet ist, eine Supplemental Enhancement Information-Nachricht (SEI-Nachricht) zu empfangen, die eine Liste von Parametern umfasst; und
der Aspekt, dass der Prozessor dazu eingerichtet ist, auf der Grundlage der Filmkörnungsstruktur-Prioritätsinformationen den reduzierten Satz von Filmkörnungsstrukturen zu bestimmen, umfasst, dass der Prozessor dazu eingerichtet ist zu bestimmen, dass der reduzierte Satz von Filmkörnungsstrukturen Filmkörnungsstrukturen umfasst, die mit einer Anzahl von Parametern verknüpft sind, die in der SEl-Nachricht zuerst aufgeführt sind.

3. Vorrichtung nach Anspruch 1, wobei jede der Filmkörnungsstrukturen der mehreren Filmkörnungsstrukturen mit einem entsprechenden Gewicht verknüpft ist, und wobei der Aspekt, dass der Prozessor dazu eingerichtet ist, auf der Grundlage der Filmkörnungsstruktur-Prioritätsinformationen den reduzierten Satz von Filmkörnungsstrukturen zu bestimmen, umfasst, dass der Prozessor dazu eingerichtet ist zu bestimmen, dass der reduzierte Satz von Filmkörnungsstrukturen eine Anzahl von Filmkörnungsstrukturen der mehreren Filmkörnungsstrukturen mit dem größten entsprechenden Gewicht umfasst.

4. Vorrichtung nach Anspruch 3, wobei das entsprechende Gewicht einer gegebenen Filmkörnungsstruktur auf mindestens einem von Folgendem basiert:
einer Summe von Intensitätsintervallgrößen, die mit der gegebenen Filmkörnungsstruktur verknüpft sind;
einer Anzahl von Pixeln, auf die die gegebene Filmkörnungsstruktur angewendet wird;
einem Skalierungsfaktor, der mit der gegebenen Filmkörnungsstruktur verknüpft ist;
einem Intensitätswert, der mit der gegebenen Filmkörnungsstruktur verknüpft ist; und
einem gewichteten Durchschnitt von Parameterwerten, die mit der gegebenen Filmkörnungsstruktur verknüpft sind.

5. Vorrichtung nach Anspruch 1, wobei:
eine erste Filmkörnungsstruktur des reduzierten Satzes von Filmkörnungsstrukturen mit einem ersten Satz von Filmkörnungsparametern verknüpft ist;
eine zweite Filmkörnungsstruktur des reduzierten Satzes von Filmkörnungsstrukturen mit einem zweiten Satz von Filmkörnungsparametern verknüpft ist;
der Prozessor des Weiteren dazu eingerichtet ist, eine Supplemental Enhancement Information-Nachricht (SEI-Nachricht) zu empfangen, die einen dritten Satz von Filmkörnungsparametern angibt; und
der Aspekt, dass der Prozessor dazu eingerichtet ist, die Filmkörnungsstrukturanalyse an dem reduzierten Satz von Filmkörnungsstrukturen durchzuführen, umfasst, dass der Prozessor dazu eingerichtet ist, eine erste Differenz zwischen dem ersten Satz von Filmkörnungsparametern und dem dritten Satz von Filmkörnungsparametern und eine zweite Differenz zwischen dem zweiten Satz von Filmkörnungsparametern und dem dritten Satz von Filmkörnungsparametern zu bestimmen.

6. Vorrichtung nach Anspruch 5, wobei der Aspekt, dass der Prozessor dazu eingerichtet ist, auf der Grundlage der Filmkörnungsstrukturanalyse die Filmkörnungsstruktur auszuwählen, die auf die Pixelkomponente des Blocks angewendet werden soll, umfasst, dass der Prozessor eingerichtet ist zum:
unter einer Bedingung, dass die erste Differenz kleiner als die zweite Differenz ist, Auswählen der ersten Filmkörnungsstruktur, die auf die Pixelkomponente des Blocks angewendet werden soll; und
unter einer Bedingung, dass die zweite Differenz kleiner als die erste Differenz ist, Auswählen der zweiten Filmkörnungsstruktur, die auf die Pixelkomponente des Blocks angewendet werden soll.

7. Vorrichtung nach Anspruch 1, wobei der Prozessor des Weiteren eingerichtet ist zum:
Bestimmen eines Skalierungsfaktors, der mit der ausgewählten Filmkörnungsstruktur verknüpft ist; und
Anwenden des Skalierungsfaktors auf die ausgewählte Filmkörnungsstruktur.

8. Vorrichtung nach Anspruch 1, wobei die Filmkörnungsstruktur-Prioritätsinformationen angeben:
eine Regel zum Priorisieren der mehreren Filmkörnungsstrukturen; und
eine maximale Anzahl von Filmkörnungsstrukturen, die der reduzierte Satz von Filmkörnungsstrukturen enthalten darf.

9. Vorrichtung nach Anspruch 1, wobei die Pixelkomponente des Blocks eine Pixelintensitätskomponente umfasst.

10. Verfahren, umfassend:
Erhalten von Filmkörnungsstruktur-Prioritätsinformationen, die mit mehreren Filmkörnungsstrukturen für einen Block verknüpft sind;
Bestimmen, auf der Grundlage der Filmkörnungsstruktur-Prioritätsinformationen, eines reduzierten Satzes von Filmkörnungsstrukturen aus den mehreren Filmkörnungsstrukturen, an denen eine Filmkörnungsstrukturanalyse durchgeführt werden soll;
Durchführen der Filmkörnungsstrukturanalyse an dem reduzierten Satz von Filmkörnungsstrukturen;
Auswählen, auf der Grundlage der Filmkörnungsstrukturanalyse, einer Filmkörnungsstruktur aus dem reduzierten Satz von Filmkörnungsstrukturen, die auf eine Pixelkomponente des Blocks angewendet werden soll; und
Anwenden der ausgewählten Filmkörnungsstruktur auf die Pixelkomponente des Blocks.

11. Verfahren nach Anspruch 10, wobei:
das Verfahren des Weiteren umfasst, eine Supplemental Enhancement Information-Nachricht (SEI-Nachricht) zu empfangen, die eine Liste von Parametern umfasst; und
das Bestimmen, auf der Grundlage der Filmkörnungsstruktur-Prioritätsinformationen, des reduzierten Satzes von Filmkörnungsstrukturen umfasst zu bestimmen, dass der reduzierte Satz von Filmkörnungsstrukturen Filmkörnungsstrukturen umfasst, die mit einer Anzahl von Parametern verknüpft sind, die in der SEI-Nachricht zuerst aufgeführt sind.

12. Verfahren nach Anspruch 10, wobei jede der Filmkörnungsstrukturen der mehreren Filmkörnungsstrukturen mit einem entsprechenden Gewicht verknüpft ist, und wobei das Bestimmen, auf der Grundlage der Filmkörnungsstruktur-Prioritätsinformationen, des reduzierten Satzes von Filmkörnungsstrukturen umfasst zu bestimmen, dass der reduzierte Satz von Filmkörnungsstrukturen eine Anzahl von Filmkörnungsstrukturen der mehreren Filmkörnungsstrukturen mit dem größten entsprechenden Gewicht umfasst.

13. Verfahren nach Anspruch 12, wobei das entsprechende Gewicht einer gegebenen Filmkörnungsstruktur auf mindestens einem von Folgendem basiert:
einer Summe von Intensitätsintervallgrößen, die mit der gegebenen Filmkörnungsstruktur verknüpft sind;
einer Anzahl von Pixeln, auf die die gegebene Filmkörnungsstruktur angewendet wird;
einem Skalierungsfaktor, der mit der gegebenen Filmkörnungsstruktur verknüpft ist;
einem Intensitätswert, der mit der gegebenen Filmkörnungsstruktur verknüpft ist; und
einem gewichteten Durchschnitt von Parameterwerten, die mit der gegebenen Filmkörnungsstruktur verknüpft sind.

14. Verfahren nach Anspruch 10, wobei:
eine erste Filmkörnungsstruktur des reduzierten Satzes von Filmkörnungsstrukturen mit einem ersten Satz von Filmkörnungsparametern verknüpft ist;
eine zweite Filmkörnungsstruktur des reduzierten Satzes von Filmkörnungsstrukturen mit einem zweiten Satz von Filmkörnungsparametern verknüpft ist;
das Verfahren des Weiteren umfasst, eine Supplemental Enhancement Information-Nachricht (SEI-Nachricht) zu empfangen, die einen dritten Satz von Filmkörnungsparametern angibt; und
das Durchführen der Filmkörnungsstrukturanalyse an dem reduzierten Satz von Filmkörnungsstrukturen umfasst, eine erste Differenz zwischen dem ersten Satz von Filmkörnungsparametern und dem dritten Satz von Filmkörnungsparametern und eine zweite Differenz zwischen dem zweiten Satz von Filmkörnungsparametern und dem dritten Satz von Filmkörnungsparametern zu bestimmen.

15. Verfahren nach Anspruch 14, wobei das Auswählen, auf der Grundlage der Filmkörnungsstrukturanalyse, der Filmkörnungsstruktur, die auf die Pixelkomponente des Blocks angewendet werden soll, umfasst:
unter einer Bedingung, dass die erste Differenz kleiner als die zweite Differenz ist, Auswählen der ersten Filmkörnungsstruktur, die auf die Pixelkomponente des Blocks angewendet werden soll; und
unter einer Bedingung, dass die zweite Differenz kleiner als die erste Differenz ist, Auswählen der zweiten Filmkörnungsstruktur, die auf die Pixelkomponente des Blocks angewendet werden soll.

## Revendications

1. Dispositif, comprenant :
un processeur configuré pour :
obtenir des informations de priorité de motifs de grain de film associées à une pluralité de motifs de grain de film pour un bloc ;
déterminer, sur la base des informations de priorité de motifs de grain de film, un ensemble réduit de motifs de grain de film, parmi la pluralité de motifs de grain de film, sur lequel réaliser une analyse de motifs de grain de film ;
réaliser l'analyse de motifs de grain de film sur l'ensemble réduit de motifs de grain de film ;
sélectionner, sur la base de l'analyse de motifs de grain de film, un motif de grain de film, parmi l'ensemble réduit de motifs de grain de film, à appliquer à un composant de pixel du bloc ; et
appliquer le motif de grain de film sélectionné au composant de pixel du bloc.

2. Dispositif selon la revendication 1, dans lequel :
le processeur est en outre configuré pour recevoir un message d'informations d'amélioration supplémentaires (SEI) comprenant une liste de paramètres ; et
le fait que le processeur est configuré pour déterminer, sur la base des informations de priorité de motifs de grain de film, l'ensemble réduit de motifs de grain de film comprend le fait que le processeur est configuré pour déterminer que l'ensemble réduit de motifs de grain de film comprend des motifs de grain de film associés à un nombre de paramètres qui sont listés en premier dans le message SEI.

3. Dispositif selon la revendication 1, dans lequel chacun des motifs de grain de film de la pluralité de motifs de grain de film est associé à un poids correspondant, et dans lequel le fait que le procédé est configuré pour déterminer, sur la base des informations de priorité de motifs de grain de film, l'ensemble réduit de motifs de grain de film comprend le fait que le processeur est configuré pour déterminer que l'ensemble réduit de motifs de grain de film comprend un nombre de motifs de grain de film, parmi la pluralité de motifs de grain de film, avec le poids correspondant le plus grand.

4. Dispositif selon la revendication 3, dans lequel le poids correspondant d'un motif de grain de film donné est basé sur au moins l'un parmi :
une somme de tailles d'intervalle d'intensité associées au motif de grain de film donné ;
un nombre de pixels auxquels le motif de grain de film donné sera appliqué ;
un facteur d'échelle associé au motif de grain de film donné ;
une valeur d'intensité associée au motif de grain de film donné ; ou
une moyenne pondérée de valeurs de paramètre associées au motif de grain de film donné.

5. Dispositif selon la revendication 1, dans lequel :
un premier motif de grain de film de l'ensemble réduit de motifs de grain de film est associé à un premier ensemble de paramètres de grain de film ;
un deuxième motif de grain de film de l'ensemble réduit de motifs de grain de film est associé à un deuxième ensemble de paramètres de grain de film ;
le processeur est en outre configuré pour recevoir un message d'informations d'amélioration supplémentaires (SEI) qui indique un troisième ensemble de paramètres de grain de film ; et
le fait que le processeur est configuré pour réaliser l'analyse de motifs de grain de film sur l'ensemble réduit de motifs de grain de film comprend le fait que le processeur est configuré pour déterminer une première différence entre le premier ensemble de paramètres de grain de film et le troisième ensemble de paramètres de grain de film, et une deuxième différence entre le deuxième ensemble de paramètres de grain de film et le troisième ensemble de paramètres de grain de film.

6. Dispositif selon la revendication 5, dans lequel le fait que le procédé est configuré pour sélectionner, sur la base de l'analyse de motifs de grain de film, le motif de grain de film à appliquer au composant de pixel du bloc comprend le fait que le processeur est configuré pour :
à condition que la première différence soit inférieure à la deuxième différence, sélectionner le premier motif de grain de film à appliquer au composant de pixel du bloc ; et
à condition que la deuxième différence soit inférieure à la première différence, sélectionner le deuxième motif de grain de film à appliquer au composant de pixel du bloc.

7. Dispositif selon la revendication 1, dans lequel le processeur est en outre configuré pour :
déterminer un facteur d'échelle associé au motif de grain de film sélectionné ; et
appliquer le facteur d'échelle au motif de grain de film sélectionné.

8. Dispositif selon la revendication 1, dans lequel les informations de priorité de motifs de grain de film indiquent :
une règle de priorisation de la pluralité de motifs de grain de film ; et
un nombre maximum de motifs de grain de film que l'ensemble réduit de motifs de grain de film peut inclure.

9. Dispositif selon la revendication 1, dans lequel le composant de pixel du bloc comprend un composant d'intensité de pixel.

10. Procédé, comprenant :
l'obtention d'informations de priorité de motifs de grain de film associées à une pluralité de motifs de grain de film pour un bloc ;
la détermination, sur la base des informations de priorité de motifs de grain de film, d'un ensemble réduit de motifs de grain de film, parmi la pluralité de motifs de grain de film, sur lequel réaliser une analyse de motifs de grain de film ;
la réalisation de l'analyse de motifs de grain de film sur l'ensemble réduit de motifs de grain de film ;
la sélection, sur la base de l'analyse de motifs de grain de film, d'un motif de grain de film, parmi l'ensemble réduit de motifs de grain de film, à appliquer à un composant de pixel du bloc ; et
l'application du motif de grain de film sélectionné au composant de pixel du bloc.

11. Procédé selon la revendication 10, dans lequel :
le procédé comprend en outre la réception d'un message d'informations d'amélioration supplémentaires (SEI) comprenant une liste de paramètres ; et
la détermination, sur la base des informations de priorité de motifs de grain de film, de l'ensemble réduit de motifs de grain de film comprend la détermination que l'ensemble réduit de motifs de grain de film comprend des motifs de grain de film associés à un nombre de paramètres qui sont listés en premier dans le message SEI.

12. Procédé selon la revendication 10, dans lequel chacun des motifs de grain de film de la pluralité de motifs de grain de film est associé à un poids correspondant, et dans lequel la détermination, sur la base des informations de priorité de motifs de grain de film, de l'ensemble réduit de motifs de grain de film comprend la détermination que l'ensemble réduit de motifs de grain de film comprend un nombre de motifs de grain de film, parmi la pluralité de motifs de grain de film, avec le poids correspondant le plus grand.

13. Procédé selon la revendication 12, dans lequel le poids correspondant d'un motif de grain de film donné est basé sur au moins l'un parmi :
une somme de tailles d'intervalle d'intensité associées au motif de grain de film donné ;
un nombre de pixels auxquels le motif de grain de film donné sera appliqué ;
un facteur d'échelle associé au motif de grain de film donné ;
une valeur d'intensité associée au motif de grain de film donné ; ou
une moyenne pondérée de valeurs de paramètre associées au motif de grain de film donné.

14. Procédé selon la revendication 10, dans lequel :
un premier motif de grain de film de l'ensemble réduit de motifs de grain de film est associé à un premier ensemble de paramètres de grain de film ;
un deuxième motif de grain de film de l'ensemble réduit de motifs de grain de film est associé à un deuxième ensemble de paramètres de grain de film ;
le procédé comprend en outre la réception d'un message d'informations d'amélioration supplémentaires (SEI) qui indique un troisième ensemble de paramètres de grain de film ; et
la réalisation de l'analyse de motifs de grain de film sur l'ensemble réduit de motifs de grain de film comprend la détermination d'une première différence entre le premier ensemble de paramètres de grain de film et le troisième ensemble de paramètres de grain de film, et d'une deuxième différence entre le deuxième ensemble de paramètres de grain de film et le troisième ensemble de paramètres de grain de film.

15. Procédé selon la revendication 14, dans lequel la sélection, sur la base de l'analyse de motifs de grain de film, du motif de grain de film à appliquer au composant de pixel du bloc comprend :
à condition que la première différence soit inférieure à la deuxième différence, la sélection du premier motif de grain de film à appliquer au composant de pixel du bloc ; et
à condition que la deuxième différence soit inférieure à la première différence, la sélection du deuxième motif de grain de film à appliquer au composant de pixel du bloc.
